(19) Europäisches Patentamt / European Patent Office / Office européen des brevets

(11) **EP 3 858 803 B1**

(12) # EUROPEAN PATENT SPECIFICATION

(45) Date of publication and mention
of the grant of the patent:
**24.09.2025 Bulletin 2025/39**

(21) Application number: **19867895.5**

(22) Date of filing: **04.09.2019**

(51) International Patent Classification (IPC):
**C04B 35/5831** (2006.01)    **C04B 35/645** (2006.01)
**C01B 21/064** (2006.01)

(52) Cooperative Patent Classification (CPC):
**C01B 21/0648; C04B 35/5831; C04B 35/645;**
C01P 2002/60; C01P 2002/76; C01P 2004/03;
C01P 2004/54; C01P 2006/10; C01P 2006/80;
C04B 2235/386; C04B 2235/5436; C04B 2235/604;
C04B 2235/6567; C04B 2235/661; C04B 2235/767;
(Cont.)

(86) International application number:
**PCT/JP2019/034850**

(87) International publication number:
**WO 2020/066517 (02.04.2020 Gazette 2020/14)**

(54) **POLYCRYSTALLINE CUBIC BORON NITRIDE**

POLYKRISTALLINES KUBISCHES BORNITRID

NITRURE DE BORE CUBIQUE POLYCRISTALLIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2018 JP 2018182464**

(43) Date of publication of application:
**04.08.2021 Bulletin 2021/31**

(73) Proprietors:
• **Sumitomo Electric Hardmetal Corp.**
**Itami-shi, Hyogo 664-0016 (JP)**
• **SUMITOMO ELECTRIC INDUSTRIES, LTD.**
**Osaka-shi, Osaka 541-0041 (JP)**

(72) Inventors:
• **HIRANO, Tsutomu**
**Itami-shi, Hyogo 664-0016 (JP)**
• **KUKINO, Satoru**
**Itami-shi, Hyogo 664-0016 (JP)**
• **HIRAI, Kei**
**Osaka-shi, Osaka 541-0041 (JP)**

(74) Representative: **Boult Wade Tennant LLP
Salisbury Square House
8 Salisbury Square
London EC4Y 8AP (GB)**

(56) References cited:
EP-A1- 2 752 398     EP-A1- 3 255 023
WO-A1-2004/103615     JP-A- 2014 080 323
JP-A- 2014 080 323     JP-A- H04 243 975
US-A1- 2011 230 122

• N. V. NOVIKOV, V.P. BONDARENKO, YU. A.
KOCHERZHINSKY, A. V. BELINKINA, V. K.
GERASIMENKO, E. V. STOLYAROV, B. M.
TOVSTOGAN: "Issledovaniye plasticheskoy
deformatsii kubicheskogo nitrida bora
[Research of plastic deformation of cubic nitride
boron]", SVERKHTVERDYE MATERIALY, no. 2,
14 May 1985 (1985-05-14), pages 17 - 20,
XP009526717, ISSN: 0203-3119

**(Cont. next page)**

(52) Cooperative Patent Classification (CPC): (Cont.)
C04B 2235/782; C04B 2235/785; C04B 2235/788;
C04B 2235/80; C04B 2235/96

**Description**

TECHNICAL FIELD

The present disclosure relates to a polycrystalline cubic boron nitride, which is claimed, and a method for manufacturing the same, which is not claimed. This application claims priority based on Japanese Patent Application No. 2018-182464 that was filed on September 27, 2018.

BACKGROUND ART

Cubic boron nitrides (hereinafter also referred to as "cBNs") have a hardness second to that of diamond, and are excellent in thermal stability and chemical stability. In addition, since cBNs are more stable to iron-based materials than diamond is, cubic boron nitride sintered bodies have been used as a processing tool for iron-based materials.

The cubic boron nitride sintered bodies that have been used contain about 10 to 40% by volume of a binder. However, the binder has been a cause of reducing the strength and thermal diffusivity of the sintered bodies. In particular, when the cubic boron nitride sintered bodies are used for cutting iron-based materials at high speed, there is a tendency that the thermal load increases, the cutting edge is easily chipped or cracked, and the tool life is shortened.

In order to solve these problems, a method for producing a cubic boron nitride sintered body containing no binder has been developed. In the method, no binder is used, and a hexagonal boron nitride is directly converted into a cubic boron nitride under ultra-high pressure and ultra-high temperature, and simultaneously sintered.

In Japanese Patent Laying-Open No. 11-246271 (PTL 1), a technique is disclosed in which a low crystalline hexagonal boron nitride is directly converted into a cubic boron nitride sintered body under ultra-high temperature and ultra-high pressure, and sintered to obtain a cubic boron nitride sintered body. EP 3 255 023 A1 (PTL 2) and EP 2 752 398 A1 (PTL 3) disclose polycrystalline cubic boron nitride.

CITATION LIST

PATENT LITERATURE

PTL 1: Japanese Patent Laying-Open No. 11-246271
PTL 2: EP 3 255 023 A1
PTL 3: EP 2 752 398 A1

SUMMARY OF INVENTION

The polycrystalline cubic boron nitride according to an aspect of the present disclosure is the invention defined in the appended claims 1-6.

The method for manufacturing a polycrystalline cubic boron nitride according to an aspect of the present disclosure, which is not claimed, is

a method for manufacturing the polycrystalline cubic boron nitride described above, the method including
a step of preparing a hexagonal boron nitride powder; and
a heating and pressurizing step of heating and pressurizing the hexagonal boron nitride powder to a temperature greater than or equal to 1900°C and less than or equal to 2400°C and to a pressure greater than or equal to 8 GPa, with the temperature and the pressure passing through a temperature and a pressure in a stable region of a wurtzite boron nitride,
wherein the stable region of the wurtzite boron nitride simultaneously satisfy Formulae 1 and 2 shown below:

$$P \geq -0.0037T + 11.301 \qquad \text{Formula 1}$$

; and

$$P \leq -0.085T + 117 \qquad \text{Formula 2}$$

where T represents the temperature in °C and P represents the pressure in GPa, and

wherein in the heating and pressurizing step, an entry temperature into the stable region of the wurtzite boron nitride is greater than or equal to 600°C.

BRIEF DESCRIPTION OF DRAWINGS

Fig. 1 is a pressure-temperature phase diagram of boron nitride.
Fig. 2 is a diagram for illustrating a method for manufacturing a polycrystalline cubic boron nitride (a pattern A) according to an embodiment of the present disclosure.
Fig. 3 is a diagram for illustrating a method for manufacturing a polycrystalline cubic boron nitride (a pattern B) according to another embodiment of the present disclosure.
Fig. 4 is a diagram for illustrating a method for manufacturing a polycrystalline cubic boron nitride (a pattern C) according to still another embodiment of the present disclosure.
Fig. 5 is a diagram for illustrating a method for manufacturing a polycrystalline cubic boron nitride (a pattern D) according to a further embodiment of the present disclosure.
Fig. 6 is a diagram for illustrating an example of a method for manufacturing a polycrystalline cubic boron nitride, as conventional.
Fig. 7 is a diagram for illustrating an example of a method for manufacturing a polycrystalline cubic boron nitride as a reference.
Fig. 8 is a diagram for illustrating an aspect ratio of a crystal grain.

DETAILED DESCRIPTION

[Problem to be Solved by the Present Disclosure]

The cubic boron nitride sintered body in PTL 1 has a high hardness because the cubic boron nitride sintered body contains cubic boron nitride grains having a small grain size. The cubic boron nitride sintered body, however, tends to have a low toughness. Therefore, when the cubic boron nitride sintered bodies are used for cutting iron-based materials at high speed, there is a tendency that the cutting edge is easily chipped or cracked, and the tool life is shortened.

Therefore, an object of the present invention is to provide a polycrystalline cubic boron nitride that, when used as a tool, can achieve a long tool life even in high-speed processing of iron-based materials.

[Advantageous Effect of the Present Disclosure]

The polycrystalline cubic boron nitride according to the above aspect, when used as a tool, can achieve a long tool life even in high-speed processing of iron-based materials.

[Description of Embodiments of the Present Disclosure]

First, embodiments of the present disclosure will be listed and described.

(1) The polycrystalline cubic boron nitride according to an aspect of the present disclosure, which is claimed, is

a polycrystalline cubic boron nitride containing a cubic boron nitride at a content greater than or equal to 98.5% by volume,
the polycrystalline cubic boron nitride having a dislocation density less than or equal to $8 \times 10^{15}/m^2$, the polycrystalline cubic boron nitride includes a plurality of crystal grains, and the plurality of crystal grains having a median diameter d50 of the equivalent circle diameter greater than or equal to 0.1 $\mu$m and less than or equal to 0.5 $\mu$m.

When used as a tool, the polycrystalline cubic boron nitride can achieve a long tool life even in high-speed processing of iron-based materials.

(2) The dislocation density is preferably less than or equal to $7 \times 10^{15}/m^2$. With this dislocation density, the life of a tool using the polycrystalline cubic boron nitride is further improved.

(3) Preferably, the polycrystalline cubic boron nitride has an area rate S1 of crystal grains, the crystal grains having an equivalent circle diameter greater than or equal to 1 $\mu$m, less than or equal to 20 area% at a cross section of the polycrystalline cubic boron nitride as observed with a scanning electron microscope at a magnification of 10,000. With this area rate, the life of a tool using the polycrystalline cubic boron nitride is further improved.

(4) The area rate S1 is preferably less than or equal to 15 area%. With this area rate, the life of a tool using the polycrystalline cubic boron nitride is further improved.

(5) The plurality of crystal grains have a median diameter d50 of the equivalent circle diameter greater than or equal to 0.1 μm and less than or equal to 0.5 μm. With this median diameter, the wear resistance of the polycrystalline cubic boron nitride is improved.

(6) The polycrystalline cubic boron nitride preferably has an area rate S2 of plate-like grains, the plate-like grains having an aspect ratio greater than or equal to 4, less than or equal to 5 area% at a cross section of the polycrystalline cubic boron nitride as observed with a scanning electron microscope at a magnification of 10,000. With this area rate, the life of a tool using the polycrystalline cubic boron nitride is further improved.

(7) The method for manufacturing a polycrystalline cubic boron nitride according to an aspect of the present disclosure, which is not claimed, is

a method for manufacturing the polycrystalline cubic boron nitride according to any of (1) to (6) described above, the method including:

a step of preparing a hexagonal boron nitride powder; and

a heating and pressurizing step of heating and pressurizing the hexagonal boron nitride powder to a temperature greater than or equal to 1900°C and less than or equal to 2400°C and to a pressure greater than or equal to 8 GPa, with the temperature and the pressure passing through a temperature and a pressure in a stable region of a wurtzite boron nitride,

wherein the stable region of the wurtzite boron nitride simultaneously satisfy Formulae 1 and 2 shown below:

$$P \geq -0.0037T + 11.301 \qquad \text{Formula 1}$$

; and

$$P \leq -0.085T + 117 \qquad \text{Formula 2}$$

where T represents the temperature in °C and P represents the pressure in GPa, and

wherein in the heating and pressurizing step, an entry temperature into the stable region of the wurtzite boron nitride is greater than or equal to 600°C.

When used as a tool, the polycrystalline cubic boron nitride that is produced by the method can achieve a long tool life even in high-speed processing of iron-based materials.

(8) The entry temperature is preferably greater than or equal to 900°C. With this entry temperature, the life of a tool using the obtained polycrystalline cubic boron nitride is further improved.

(9) The entry temperature is preferably greater than or equal to 1200°C. With this entry temperature, the life of a tool using the obtained polycrystalline cubic boron nitride is further improved.

(10) The method preferably includes a step before the heating and pressurizing step, the step being is a step of pressurizing the hexagonal boron nitride powder to a pressure greater than or equal to 0.5 GPa and less than or equal to 6 GPa at a temperature maintained in a range greater than or equal to -50°C and less than or equal to 100°C.

By performing the above-described step, the gap in the hexagonal boron nitride powder can be compressed, and unnecessary gas present in the hexagonal boron nitride powder can be discharged out of the system. Therefore, it is possible to prevent quality degradation due to a chemical reaction between the gas and the hexagonal boron nitride powder.

By performing the above-described step, it is possible to increase the density of the hexagonal boron nitride powder to such an extent that the outer shape hardly changes even when the hexagonal boron nitride powder is further pressurized. Since the heating and pressurizing step can be performed in the state, the polycrystalline cubic boron nitride can be manufactured stably.

(11) The method preferably includes a temperature and pressure holding step after the heating and pressurizing step, the temperature and pressure holding step being a step of holding the polycrystalline cubic boron nitride produced by the heating and pressurizing step under conditions of a temperature greater than or equal to 1900°C and less than or equal to 2400°C and a pressure greater than or equal to 8 GPa for greater than or equal to 10 minutes. According to this method, the produced polycrystalline cubic boron nitride can achieve a longer tool life.

[Details of Embodiments of the Present Disclosure]

The polycrystalline cubic boron nitride and the method for manufacturing the same according to an embodiment of the present disclosure will be described below with reference to the drawings.

[Embodiment 1: Polycrystalline Cubic Boron nitride, which is claimed]

The polycrystalline cubic boron nitride according to an embodiment of the present disclosure will be described.

<Polycrystalline Cubic Boron Nitride>

The polycrystalline cubic boron nitride according to the present embodiment contains a cubic boron nitride at a content greater than or equal to 98.5% by volume, and has a dislocation density less than or equal to $8 \times 10^{15}/m^2$

The polycrystalline cubic boron nitride according to the present embodiment is a sintered body, but is referred to as "polycrystalline" in the present embodiment because the sintered body is often intended to contain a binder.

When used as a tool, the polycrystalline cubic boron nitride according to the present embodiment can achieve a long tool life even in high-speed processing of iron-based materials. The reason is presumably as (i) and (ii) shown below.

(i) The polycrystalline cubic boron nitride according to the present embodiment contains a cubic boron nitride at a content greater than or equal to 98.5% by volume, and contains substantially neither a binder, a sintering aid, a catalyst, nor the like. As a result, grains of the cubic boron nitride are firmly bonded together, and the strength and thermal diffusivity of the polycrystalline cubic boron nitride are improved. Therefore, a tool using the polycrystalline cubic boron nitride can achieve a long tool life even in high-speed processing of iron-based materials.

(ii) The polycrystalline cubic boron nitride according to the present embodiment has a dislocation density less than or equal to $8 \times 10^{15}/m^2$. The polycrystalline cubic boron nitride has reduced lattice defects and is thus enhanced in strength and toughness. Therefore, a tool using the polycrystalline cubic boron nitride can achieve a long tool life even in high-speed processing of iron-based materials.

<Composition>

The polycrystalline cubic boron nitride contains a cubic boron nitride at a content greater than or equal to 98.5% by volume. As a result, the polycrystalline cubic boron nitride has an excellent hardness, and is excellent in thermal stability and chemical stability.

The polycrystalline cubic boron nitride may contain one or both of a compressed hexagonal boron nitride and a wurtzite boron nitride at a total content less than or equal to 1.5% by volume in addition to a cubic boron nitride as long as the effects of the present embodiment are exhibited. Here, the word "compressed hexagonal boron nitride" means a hexagonal boron nitride having a crystal structure similar to that of a normal hexagonal boron nitride, and having a plane spacing along the c-axis smaller than that of a normal hexagonal boron nitride (0.333 nm).

The polycrystalline cubic boron nitride according to the present embodiment may contain inevitable impurities as long as the effects of the present embodiment are exhibited. Examples of the inevitable impurities include hydrogen, oxygen, carbon, and metal elements such as alkali metal elements (lithium (Li), sodium (Na), potassium (K), and the like) and alkaline earth metal elements (calcium (Ca), magnesium (Mg), and the like). When the polycrystalline cubic boron nitride contains the inevitable impurities, the content of the inevitable impurities is preferably less than or equal to 0.1% by volume. The content of the inevitable impurities can be measured by secondary ion mass spectrometry (SIMS).

The polycrystalline cubic boron nitride contains substantially neither a binder, a sintering aid, a catalyst, nor the like. As a result, the strength and thermal diffusivity of the polycrystalline cubic boron nitride are improved.

The content rate of the cubic boron nitride in the polycrystalline cubic boron nitride is preferably greater than or equal to 98.5% by volume and less than or equal to 100% by volume, and more preferably greater than or equal to 99% by volume and less than or equal to 100% by volume.

The total content rate of the compressed hexagonal boron nitride and the wurtzite boron nitride in the polycrystalline cubic boron nitride is preferably greater than or equal to 0% by volume and less than or equal to 1.5% by volume, more preferably greater than or equal to 0% by volume and less than or equal to 1% by volume, and most preferably 0% by volume. That is, it is most preferable that the polycrystalline cubic boron nitride contain neither the compressed hexagonal boron nitride nor the wurtzite boron nitride.

The content rate of the compressed hexagonal boron nitride in the polycrystalline cubic boron nitride is preferably greater than or equal to 0% by volume and less than or equal to 1.5% by volume, more preferably greater than or equal to 0% by volume and less than or equal to 1% by volume, and most preferably 0% by volume. That is, it is most preferable that the polycrystalline cubic boron nitride contain no compressed hexagonal boron nitride.

The content rate of the wurtzite boron nitride in the polycrystalline cubic boron nitride is preferably greater than or equal to 0% by volume and less than or equal to 1.5% by volume, more preferably greater than or equal to 0% by volume and less than or equal to 1% by volume, and most preferably 0% by volume. That is, it is most preferable that the polycrystalline cubic boron nitride contain no wurtzite boron nitride.

The content rate (% by volume) of each of the cubic boron nitride, compressed hexagonal boron nitride, and wurtzite boron nitride in the polycrystalline cubic boron nitride can be measured by an X-ray diffraction method. A specific measurement method is as follows.

The polycrystalline cubic boron nitride is cut with a diamond grindstone electrodeposition wire, and the cut surface is taken as an observation surface.

An X-ray spectrum of the cut surface of the polycrystalline cubic boron nitride is obtained using an X-ray diffractometer ("MiniFlex600" (trade name) manufactured by Rigaku Corporation). The conditions of the X-ray diffractometer at this time are as follows, for example.

Characteristic X-ray: Cu-K$\alpha$ (wavelength 1.54 Å)
Tube voltage: 45 kV
Tube current: 40 mA
Filter: Multilayer mirror
Optical system: Focusing method
X-ray diffraction method: $\theta$-$2\theta$ method

In the obtained X-ray spectrum, the following peak intensity A, peak intensity B, and peak intensity C are measured.

Peak intensity A: The peak intensity of the compressed hexagonal boron nitride excluding the background from the peak intensity near the diffraction angle $2\theta = 28.5°$.

Peak intensity B: The peak intensity of the wurtzite boron nitride excluding the background from the peak intensity near the diffraction angle $2\theta = 40.8°$.

Peak intensity C: The peak intensity of the cubic boron nitride excluding the background from the peak intensity near the diffraction angle $2\theta = 43.5°$.

The content rate of the compressed hexagonal boron nitride is determined by calculating the value of peak intensity A/(peak intensity A + peak intensity B + peak intensity C). The content rate of the wurtzite boron nitride is determined by calculating the value of peak intensity B/(peak intensity A + peak intensity B + peak intensity C). The content rate of the cubic boron nitride is determined by calculating the value of peak intensity C/(peak intensity A + peak intensity B + peak intensity C). Because the compressed hexagonal boron nitride, wurtzite boron nitride, and cubic boron nitride all have almost the same electron density, the ratio among the above X-ray peak intensities can be regarded as the volume ratio in the polycrystalline cubic boron nitride.

<Dislocation Density>

The polycrystalline cubic boron nitride has a dislocation density less than or equal to $8 \times 10^{15}/m^2$. The polycrystalline cubic boron nitride has reduced lattice defects and is thus enhanced in strength and toughness. Therefore, a tool using the polycrystalline cubic boron nitride can achieve a long tool life even in high-speed processing of iron-based materials. The dislocation density is preferably less than or equal to $7 \times 10^{15}/m^2$, and more preferably less than or equal to $6 \times 10^{15}/m^2$. A lower limit value of the dislocation density is not particularly limited, but may be greater than or equal to $1.0 \times 10^{15}/m^2$ from the viewpoint of manufacture.

In the present specification, the dislocation density is calculated in accordance with the following procedure.

A specimen made of a polycrystalline cubic boron nitride is prepared. The specimen is sized such that an observation surface is 2.0 mm $\times$ 2.0 mm and a thickness is 1.0 mm. The observation surface of the specimen is polished.

The observation surface of the specimen is subjected to X-ray diffraction measurement under the following conditions, and a line profile of a diffraction peak from each orientation plane of cubic boron nitride's major orientations which are (111), (200), (220), (311), (400) and (331) is obtained.

(Conditions for X-ray diffraction measurement)

X-ray source: synchrotron radiation
Condition for equipment: detector NaI (fluorescence is filtered out by an appropriate ROI)
Energy: 18 keV (wavelength: 0.6888 angstrom)
Spectral crystal: Si(111)
Incident slit: 5 mm in width $\times$ 0.5 mm in height
Light receiving slit: double slit (3 mm in width $\times$ 0.5 mm in height)

Mirror: platinum-coated mirror

Incident angle: 2.5 mrad

Scanning method: $2\theta$-$\theta$scan

Measurement peak: six peaks from cubic boron nitride's (111), (200), (220), (311), (400), and (331). When it is difficult to obtain a profile depending on texture and orientation, the peak for that Miller index is excluded.

Measuring condition: there are 9 or more measurement points set in the half width. Peak top intensity is set to 2000 counts or more. Peak tail is also used in the analysis, and accordingly, the measurement range is set to about 10 times the half width.

A line profile obtained from the above X-ray diffraction measurement will be a profile including both a true broadening attributed to a physical quantity such as the sample's inhomogeneous strain and a broadening attributed to the equipment. In order to determine inhomogeneous strain and crystallite size, a component attributed to the equipment is removed from the measured line profile to obtain a true line profile. The true line profile is obtained by fitting the obtained line profile and the line profile that is attributed to the equipment by a pseudo Voigt function, and subtracting the line profile attributed to the equipment. $LaB_6$ was used as a standard sample for removing a broadening of a diffracted peak attributed to the equipment. When significantly collimated radiation is used, a broadening of a diffracted peak attributed to the equipment may be regarded as zero.

The obtained true line profile is analyzed using the modified Williamson-Hall method and the modified Warren-Averbach method to calculate dislocation density. The modified Williamson-Hall method and the modified Warren-Averbach method are known line profile analysis methods used for determining dislocation density.

The modified Williamson-Hall method's expression is represented by the following expression (I):

$$\Delta K = \frac{0.9}{D} + \left( \frac{\pi M^2 b^2}{2} \right)^{1/2} \rho^{1/2} K C^{1/2} + O(K^2 C) \qquad \text{... Expression (I)}$$

where $\Delta K$ represents a half width of a line profile, D represents a crystallite size, M represents an arrangement parameter, b represents a Burgers vector, $\rho$ represents dislocation density, K represents a scattering vector, $O(K^2C)$ represents a higher-order term of $K^2C$, and C represents an average contrast factor.

C in the above expression (I) is represented by the following expression (II):

$$C = C_{h00} [1 - q(h^2k^2 + h^2l^2 + k^2l^2)/(h^2 + k^2 + l^2)^2] \ldots \quad \text{(II)}.$$

In the above expression (II), a contrast factor $C_{h00}$ for screw dislocation and that for edge dislocation and a coefficient q for each contrast factor are obtained by using the computing code ANIZC, with a slip system of <110> {111}, and elastic stiffness $C_{11}$, $C_{12}$ and $C_{44}$ of 8.44 GPa, 1.9 GPa, and 4.83 GPa, respectively. Contrast factor $C_{h00}$ is 0.203 for screw dislocation and 0.212 for edge dislocation. The coefficient q for the contrast factor is 1.65 for screw dislocation and 0.58 for edge dislocation. Note that screw dislocation's ratio is fixed to 0.5 and edge dislocation's ratio is fixed to *0.5.*

Furthermore, between dislocation and inhomogeneous strain, a relationship represented by an expression (III) is established using contrast factor C, as below:

$$\langle \varepsilon(L)^2 \rangle = (\rho C b^2/4\pi) \ln(R_e/L) \quad \ldots \quad \text{(III)},$$

where $R_e$ represents dislocation's effective radius.

By the relationship of the above expression (III) and the Warren-Averbach expression, the following expression (IV) can be presented, and as the modified Warren-Averbach method, dislocation density $\rho$ and a crystallite size can be determined.

$$\ln A(L) = \ln A^S(L) - (\pi L^2 \rho b^2/2) \ln(R_e/L)(K^2 C) + O(K^2 C)^2 \qquad \text{(IV)},$$

where A(L) represents a Fourier series, $A^S(L)$ represents a Fourier series for a crystallite size, and L represents a Fourier length.

For details of the modified Williamson-Hall method and the modified Warren-Averbach method, see T. Ungar and A. Borbely, "The effect of dislocation contrast on x-ray line broadening: A new approach to line profile analysis," Appl. Phys. Lett., vol.69, no.21, p.3173, 1996, and T. Ungar, S. Ott, P. Sanders, A. Borbely, J. Weertman, "Dislocations, grain size and planar faults in nanostructured copper determined by high resolution X-ray diffraction and a new procedure of peak profile analysis," Acta Mater., vol.46, no.10, pp.3693-3699, 1998.

<Crystal Grains>

(Area Rate S1 of Crystal Grains Having Equivalent Circle Diameter Greater than or Equal to 1 $\mu$m)

The polycrystalline cubic boron nitride contains a plurality of crystal grains including crystal grains of the cubic boron nitride, and optionally including crystal grains of the compressed hexagonal boron nitride and crystal grains of the wurtzite boron nitride. The polycrystalline cubic boron nitride has an area rate S1 of crystal grains, the crystal grains having an equivalent circle diameter greater than or equal to 1 $\mu$m (hereinafter also referred to as "area rate S1"), less than or equal to 20 area% at a cross section of the polycrystalline cubic boron nitride as observed with a scanning electron microscope at a magnification of 10,000. Here, the word "equivalent circle diameter" means a diameter of a circle having the same area as that of the crystal grains at the cross section.

In the polycrystalline cubic boron nitride, the content rate of the coarse grains having an equivalent circle diameter greater than or equal to 1 $\mu$m is reduced. Therefore, in the polycrystalline cubic boron nitride, the homogeneity of the sintered body structure is improved, so that the strength and toughness are improved, and the polycrystalline cubic boron nitride can achieve a long tool life even in high-speed processing of iron-based materials.

The homogeneity of the crystal structure of the polycrystalline cubic boron nitride according to the present embodiment can be confirmed, for example, by observing the cubic boron nitride with a SEM (Scanning Electron Microscope).

The area rate S1 of crystal grains having an equivalent circle diameter greater than or equal to 1 $\mu$m is preferably greater than or equal to 0 area% and less than or equal to 20 area%, more preferably greater than or equal to 0 area% and less than or equal to 15 area%, and still more preferably greater than or equal to 0 area% and less than or equal to 10 area%.

(Median Diameter d50)

The plurality of crystal grains contained in the polycrystalline cubic boron nitride preferably have a median diameter d50 of the equivalent circle diameter (hereinafter also referred to as "median diameter d50") greater than or equal to 0.1 $\mu$m and less than or equal to 0.5 $\mu$m. Conventionally, it has been considered that cutting performance of a polycrystalline cubic boron nitride is improved as the crystal grain size is smaller. Therefore, the grain size of the crystal grains contained in the polycrystalline cubic boron nitride has been made small (for example, the average grain size is less than 100 nm). As a result, however, there has been a tendency for toughness to decrease. Meanwhile, in the polycrystalline cubic boron nitride according to the present embodiment, the grain size of the crystal grains is larger than that of conventional crystal grains, so that the toughness of the polycrystalline cubic boron nitride is improved, and the wear resistance is improved. The median diameter d50 of the equivalent circle diameter of the crystal grains is more preferably greater than or equal to 0.15 $\mu$m and less than or equal to 0.35 $\mu$m, and still more preferably greater than or equal to 0.2 $\mu$m and less than or equal to 0.3 $\mu$m.

(Area Rate S2 of Plate-Like Grains Having Aspect Ratio Greater than or Equal to 4)

The polycrystalline cubic boron nitride preferably has an area rate S2 of plate-like grains, the plate-like grains having an aspect ratio greater than or equal to 4 (hereinafter also referred to as "area rate S2"), less than or equal to 5 area% at a cross section of the polycrystalline cubic boron nitride as observed with a scanning electron microscope at a magnification of 10,000. In conventional polycrystalline cubic boron nitrides, the low toughness due to the small grain size is compensated by the presence of a plate-like structure in the cubic polycrystal. However, the plate-like grains suddenly fall from a cutting edge particularly during high-efficiency processing of difficult-to-cut materials to cause chipping of the cutting edge, so that the plate-like grains cause a variation and decrease in the tool life.

In the polycrystalline cubic boron nitride according to the present embodiment, the content rate of the plate-like grains having an aspect ratio greater than or equal to 4 is reduced. Therefore, in the polycrystalline cubic boron nitride, the sudden chipping of the cutting edge due to the plate-like grains hardly occurs, so that the polycrystalline cubic boron nitride can achieve a long tool life even in high-speed processing of iron-based materials.

The area rate S2 of plate-like grains having an aspect ratio greater than or equal to 4 is preferably greater than or equal to 0 area% and less than or equal to 5 area%, more preferably greater than or equal to 0 area% and less than or equal to 3 area%, and still more preferably greater than or equal to 0 area% and less than or equal to 2 area%.

(Measurement Method of Area Rate S1, Area Rate S2, and Median Diameter d50 of Equivalent Circle Diameter of Crystal Grains)

In the present specification, the phrases "area rate S1 of crystal grains having an equivalent circle diameter greater than or equal to 1 μm", "area rate S2 of plate-like grains having an aspect ratio greater than or equal to 4", and "median diameter d50 of the equivalent circle diameter of the plurality of crystal grains contained in the polycrystalline cubic boron nitride" in the polycrystalline cubic boron nitride mean the value obtained by measuring the area rate S1, the area rate S2, and the median diameter d50 of the crystal grains at each of five arbitrarily selected measurement points and calculating the average value of the area rate S1, the area rate S2, and the median diameter d50, respectively.

As measured by the applicant, it has been confirmed that, for measurement of the area rate S1, the area rate S2, and the median diameter d50 in the same sample, while a location where a field of view for measurement is selected in the polycrystalline cubic boron nitride is changed and calculation is thus performed for a plurality of times, measurement results are obtained without substantial variation and thus there is no arbitrariness even with a field of view set, as desired, for measurement.

When the polycrystalline cubic boron nitride is used as a part of a cutting tool, a portion of the polycrystalline cubic boron nitride is cut out by wire electric discharge machining, a diamond grindstone electrodeposition wire, or the like, the cut out cross section is polished, and five measurement points are arbitrarily set on the polished surface.

The method for measuring the area rate S1, the area rate S2, and the median diameter d50 of the equivalent circle diameter of the crystal grains at each measurement point will be specifically described below.

The polycrystalline cubic boron nitride is cut by wire electric discharge machining, a diamond grindstone electrodeposition wire, or the like so that the measurement point is exposed, and the cut surface is polished. The measurement point on the polished surface is observed using a SEM ("JSM-7500F" (trade name) manufactured by JEOL Ltd.) to obtain a SEM image. The size of the measurement visual field is 12 μm × 15 μm, and the observation magnification is 10,000 times.

A binarization process is performed for each of the five SEM images to make the grain boundaries clear. For example, automatic binarization is performed using image processing software (Win Roof ver. 7.4.5) and fine adjustment of a threshold value is made by checking the image as appropriate. The threshold value subjected to fine adjustment is, for example, 75.

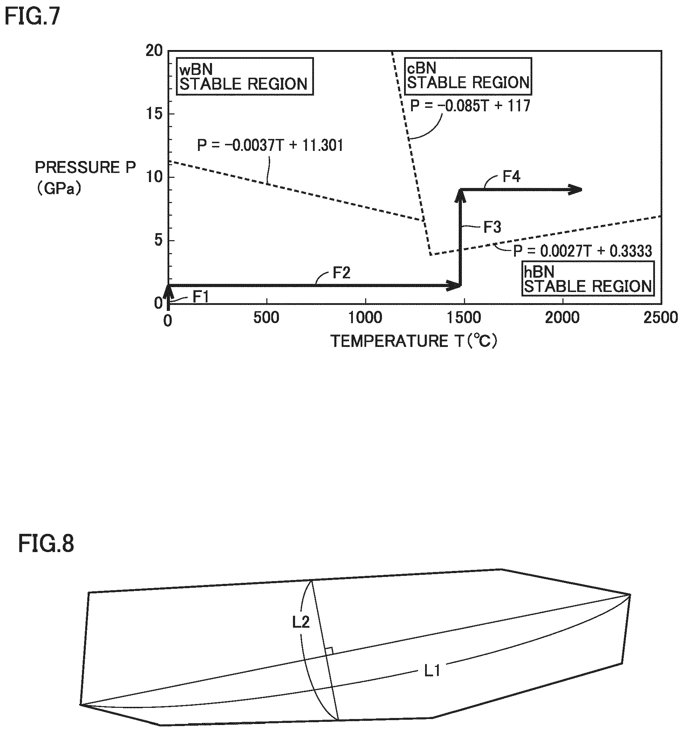

The aspect ratio of each of the crystal grains, the area of each of the crystal grains, and the distribution of the equivalent circle diameters of the crystal grains are calculated using the above-described image processing software in a state where the crystal grains observed within the measurement visual field are separated from each other at a grain boundary. Here, the word "aspect ratio" means a value of a ratio of the major axis to the minor axis (major axis/minor axis) of the crystal grain in the cut surface. When the shape of the crystal grain is indefinite as shown in Fig. 8, the aspect ratio is calculated according to the following procedures (a) to (c) using image processing software.

(a) The longest line segment that can be drawn inside the crystal grains (so that both ends of the line segment are in contact with the grain boundary) (hereinafter also referred to as "first line segment") is determined, and the length L1 of the first line segment is measured.
(b) The longest line segment that is perpendicular to the first line segment and can be drawn inside the crystal grains (so that both ends of the line segment are in contact with the grain boundary) (hereinafter also referred to as "second line segment") is determined, and the length L2 of the second line segment is measured.
(c) A value of a ratio of the length L1 of the first line segment to the length L2 of the second line segment (L1/L2) is calculated. The value of (L1/L2) is taken as the aspect ratio.

The area rate S1, the area rate S2, and the median diameter d50 are calculated using the area of the entire measurement visual field as a denominator. Based on the area of each of the crystal grains and the aspect ratio of each of the crystal grains, an area rate S1 of the crystal grains having an equivalent circle diameter greater than or equal to 1 μm and an area rate S2 of the plate-like grains having an aspect ratio greater than or equal to 4 are calculated. From the distribution of the equivalent circle diameters of the crystal grains, a median diameter d50 is calculated.

<Application>

The polycrystalline cubic boron nitride according to the present embodiment is preferably used in cutting tools, wear resistant tools, grinding tools, and the like.

The whole of each of the cutting tool, the wear resistant tool, and the grinding tool according to the present embodiment may include the polycrystalline cubic boron nitride, or only a part of each tool (for example, a cutting edge part in the case of a cutting tool) may include the polycrystalline cubic boron nitride. Furthermore, a coating film may be formed on the surface of each tool.

Examples of the cutting tool include drills, end mills, cutting edge exchangeable cutting tips for drills, cutting edge exchangeable cutting tips for end mills, cutting edge exchangeable cutting tips for milling, cutting edge exchangeable cutting tips for turning, metal saws, gear cutting tools, reamers, taps, and cutting tools.

Examples of the wear resistant tool include dies, scribers, scribing wheels, and dressers. Examples of the grinding tool include grinding stones.

[Embodiment 2: Method for manufacturing a polycrystalline cubic boron nitride, which is not claimed]

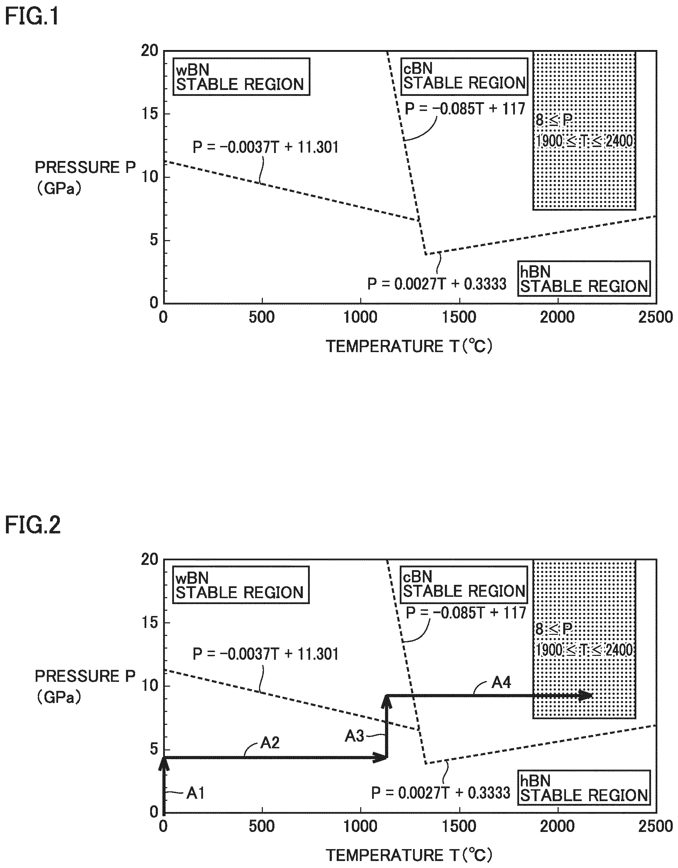

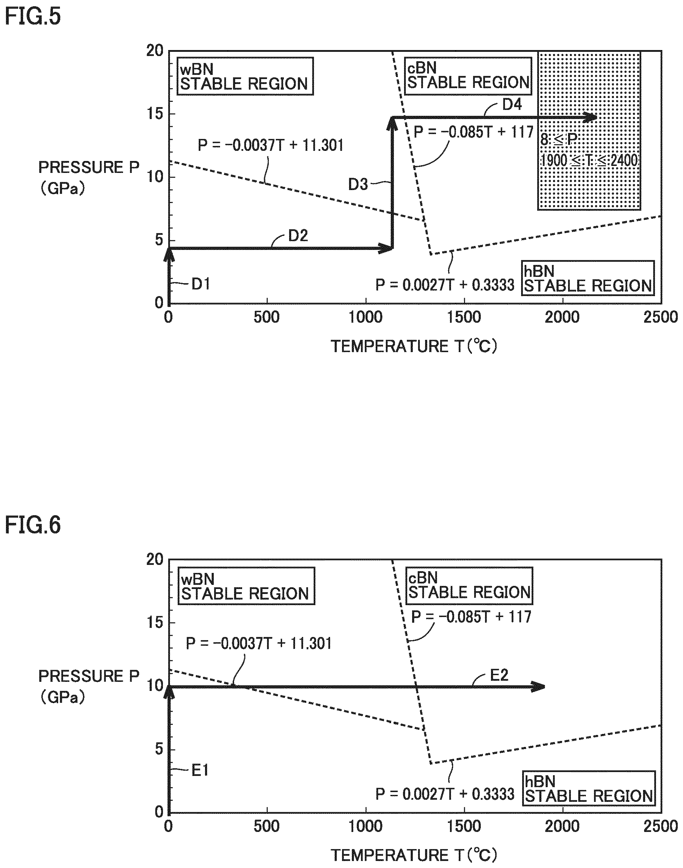

A method for manufacturing a polycrystalline cubic boron nitride according to an embodiment of the present disclosure will be described with reference to Figs. 1 to 7. Fig. 1 is a pressure-temperature phase diagram of boron nitride. Figs. 2 to 5 are diagrams for illustrating a method for manufacturing a polycrystalline cubic boron nitride according to an embodiment of the present disclosure. Fig. 6 is a diagram for illustrating an example of a method for manufacturing a polycrystalline cubic boron nitride, as conventional. Fig. 7 is a diagram for illustrating an example of a method for manufacturing a polycrystalline cubic boron nitride as a reference.

The method for manufacturing a polycrystalline cubic boron nitride according to the present embodiment is a method for manufacturing a polycrystalline cubic boron nitride according to the first embodiment. The method comprises: preparing a hexagonal boron nitride powder (hereinafter also referred to as "the preparation step"); and heating and pressurizing the hexagonal boron nitride powder to a temperature greater than or equal to 1900°C and less than or equal to 2400°C and to a pressure greater than or equal to 8 GPa, with the temperature and the pressure passing through a temperature and a pressure in a stable region of a wurtzite boron nitride (hereinafter also referred to as "the heating and pressurizing step"). The stable region of the wurtzite boron nitride simultaneously satisfy Formulae 1 and 2 shown below:

$$P \geq -0.0037T + 11.301 \qquad \text{Formula 1}$$

; and

$$P \leq -0.085T + 117 \qquad \text{Formula 2}$$

where T represents the temperature in °C and P represents the pressure in GPa, and
wherein in the heating and pressurizing step, an entry temperature into the stable region of the wurtzite boron nitride is greater than or equal to 600°C.

The method for manufacturing a polycrystalline cubic boron nitride according to the present embodiment may further comprise, before the heating and pressurizing step, pressurizing the hexagonal boron nitride powder to a pressure greater than or equal to 0.5 GPa and less than or equal to 6 GPa at a temperature maintained in a range greater than or equal to -50°C and less than or equal to 100°C (hereinafter also referred to as "the pretreatment step").

The method for manufacturing a polycrystalline cubic boron nitride according to the present embodiment may further comprise, after the heating and pressurizing step, holding the polycrystalline cubic boron nitride produced by the heating and pressurizing step under conditions of a temperature greater than or equal to 1900°C and less than or equal to 2400°C and a pressure greater than or equal to 8 GPa for greater than or equal to 10 minutes (hereinafter also referred to as "the temperature and pressure holding step").

First, before specifically describing the method for manufacturing a polycrystalline cubic boron nitride according to the present embodiment, a method for manufacturing a polycrystalline cubic boron nitride, as conventional, and a method for manufacturing a polycrystalline cubic boron nitride as a reference will be described for better understanding.

As shown in Fig. 1, boron nitride has three phases of hexagonal boron nitride that is a stable phase at normal temperature and normal pressure, cubic boron nitride that is a stable phase at high temperature and high pressure, and wurtzite boron nitride that is a metastable phase during transition from hexagonal boron nitride to cubic boron nitride.

A boundary between the phases can be represented by a linear function. In the present specification, it is assumed that the temperature and pressure in the stable region of each phase can be represented by a linear function.

In the present specification, the temperature and pressure in the stable region of wurtzite boron nitride (shown in Fig. 1 as a "wBN stable region") are defined as a temperature and a pressure that simultaneously satisfy Formulae 1 and 2 shown below:

$$P \geq -0.0037T + 11.301 \qquad \text{Formula 1}$$

; and

$$P \leq -0.085T + 117 \qquad \text{Formula 2,}$$

where T represents temperature in °C and P represents pressure in GPa.

In the present specification, the temperature and pressure in the stable region of hexagonal boron nitride (shown in Fig. 1 as an "hBN stable region") are defined as a temperature and a pressure that simultaneously satisfy Formulae (A) and (B) shown below or simultaneously satisfy Formulae (C) and (D) shown below:

$$P \leq -0.0037T + 11.301 \qquad (A)$$

and

$$P \leq -0.085T + 117 \qquad (B);$$

or

$$P \leq 0.0027T + 0.3333 \qquad (C)$$

and

$$P \geq -0.085T + 117 \qquad (D),$$

where T represents temperature in °C and P represents pressure in GPa.

In the present specification, the temperature and pressure in the stable region of cubic boron nitride (shown in Fig. 1 as a "cBN stable region") are defined as a temperature and a pressure that simultaneously satisfy Formulae (D) and (E) shown below:

$$P \geq -0.085T + 117 \qquad (D);$$

and

$$P \geq 0.0027T + 0.3333 \qquad (E),$$

where T represents temperature in °C and P represents pressure in GPa.

In the method according to the present embodiment, the hexagonal boron nitride powder is heated to a temperature greater than or equal to 1900°C and less than or equal to 2400°C and pressurized to a pressure greater than or equal to 7.7 GPa, preferably greater than or equal to 8 GPa, and more preferably greater than or equal to 10 GPa. These temperature and pressure allow an obtained cubic boron nitride to exhibit excellent tool performance.

Conventionally, as a route for temperature and pressure to cause hexagonal boron nitride to reach a temperature (greater than or equal to 1900°C and less than or equal to 2400°C) and a pressure (greater than or equal to 7.7 GPa) in the stable region of cubic boron nitride that can provide cubic boron nitride allowing a tool to exhibit excellent performance, a route shown in Fig. 6 has been studied (hereinafter also referred to as "the route in Fig. 6").

Along the route in Fig. 6, from a starting temperature and a starting pressure (normal temperature and normal pressure), the pressure is raised to a pressure in the stable region of cubic boron nitride (e.g., 10 GPa or larger) (as indicated in Fig. 6 by an arrow E1), and subsequently, the temperature is raised to a temperature in the stable region of cubic boron nitride (e.g., 1900°C or higher) (as indicated in Fig. 6 by an arrow E2). The route in Fig. 6 has conventionally been employed as heating and pressurizing are each performed once and can thus be performed through a simply controlled operation.

However, when the route in Fig. 6 is followed, the route enters the stable region of wurtzite boron nitride at less than 600°C, so that atomic diffusion is less likely to occur, and the phase transition from hexagonal boron nitride to wurtzite boron nitride is mainly non-diffusive phase transition. Therefore, the obtained polycrystalline cubic boron nitride is likely to have lattice defects and coarse grains. Therefore, this cubic boron nitride is subject to sudden chipping during a working process and hence tends to provide a shorter tool life.

In contrast, phase transition temperature may be raised to facilitate atomic diffusion. For example, when the route shown in Fig. 7 is followed, from a starting temperature and a starting pressure (normal temperature and normal pressure), the temperature and the pressure are raised to a temperature and a pressure in the stable region of cubic boron nitride (e.g., 1500°C and 9 GPa), respectively, (as indicated in Fig. 7 by arrows F1, F2 and F3) without passing through the stable region of wurtzite boron nitride, and subsequently, the temperature is further raised (for example to 2100°C) (as indicated in Fig. 7 by an arrow F4).

When the route in Fig. 7 is followed, hexagonal boron nitride undergoes a direct phase transition to cubic boron nitride. However, hexagonal boron nitride and cubic boron nitride have significantly different crystal structures, and lattice defects easily occur during the phase transition. Therefore, the cubic boron nitride tends to provide a shorter tool life. Further, hexagonal boron nitride having a crystal structure significantly different from that of cubic boron nitride is transformed into cubic boron nitride by less than 98.5% by volume. Therefore, when the obtained polycrystalline cubic boron nitride is used to form a tool, the tool presents impaired performance.

As described above, when conventionally studied temperature and pressure routes are followed, it is difficult to suppress generation of lattice defects, and a polycrystalline cubic boron nitride providing an excellent tool life cannot be manufactured. Under these circumstances, the present inventors have diligently studied pressure and temperature routes, and as a result, found that treating hexagonal boron nitride at a temperature and a pressure as specified in the above heating and pressurizing step can provide a polycrystalline cubic boron nitride with suppressed lattice defects in a sintered body and providing a tool with a long life even when the tool is used in high-speed processing of iron-based materials. The steps of the method according to the present embodiment will now be described below more specifically with reference to Figs. 2 to 5.

<Preparation Step>

A hexagonal boron nitride powder is prepared as a raw material for the polycrystalline cubic boron nitride. The hexagonal boron nitride powder has a purity (or contains hexagonal boron nitride at a ratio) preferably greater than or equal to 98.5%, more preferably greater than or equal to 99%, most preferably 100%. While the grain size of the hexagonal boron nitride powder is not particularly limited, it may for example be greater than or equal to 0.1 $\mu$m and less than or equal to 10 $\mu$m.

<Pretreatment Step>

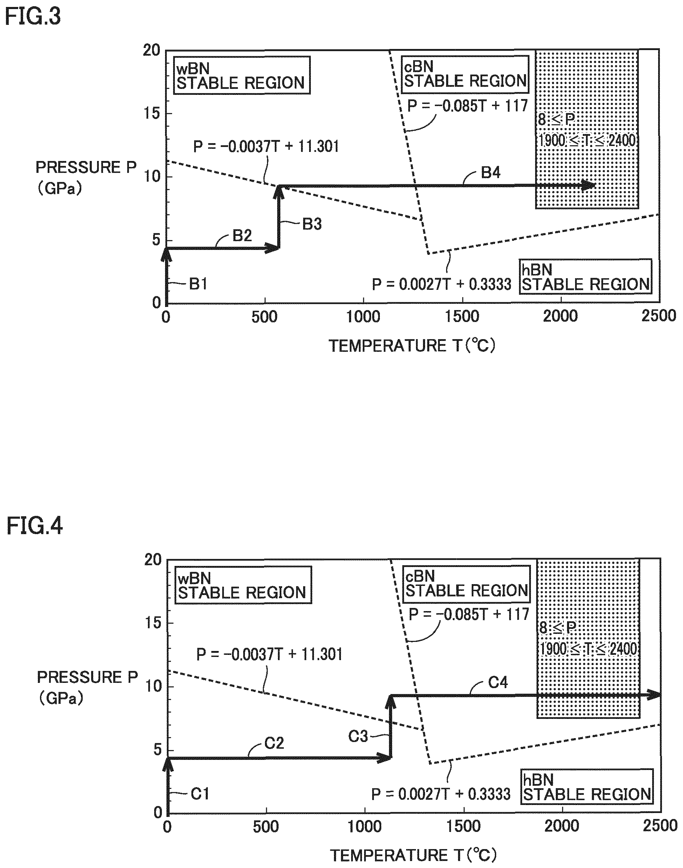

Subsequently, an ultra-high pressure and ultra-high temperature generator is used to pressurize the hexagonal boron nitride powder to a pressure greater than or equal to 0.5 GPa and less than or equal to 6 GPa while maintaining a temperature range greater than or equal to -50°C and less than or equal to 100°C (as indicated in Fig. 2 by an arrow A1, in Fig. 3 by an arrow B1, in Fig. 4 by an arrow C1, and in Fig. 5 by an arrow D1).

The pretreatment step can reduce gaps in the hexagonal boron nitride powder and expel unnecessary gas present in the hexagonal boron nitride powder out of the system. This can prevent degradation in quality attributed to a chemical reaction otherwise caused between the gas and the hexagonal boron nitride powder.

The pretreatment step can increase the hexagonal boron nitride powder in density to such an extent that further pressurizing does not substantially vary an external shape. The heating and pressurizing step can be performed in this state, which allows reliable manufacture.

The pretreatment step is performed preferably at a temperature maintained in a range greater than or equal to -50°C and less than or equal to 100°C, more preferably greater than or equal to 0°C and less than or equal to 50°C. The pretreatment step is performed with ultimate pressure preferably greater than or equal to 0.5 GPa and less than or equal to 5 GPa, more preferably greater than or equal to 1 GPa and less than or equal to 3 GPa.

In the method for manufacturing a polycrystalline cubic boron nitride according to the present embodiment, the pretreatment step is an optional step. Therefore, the heating and pressurizing step described below can be performed after the preparation step without performing the pretreatment step.

<Heating and Pressurizing Step>

Subsequently, the hexagonal boron nitride powder is heated to a temperature greater than or equal to 1900°C and less than or equal to 2400°C and pressurized to a pressure greater than or equal to 8 GPa, with the temperature and the pressure passing through a temperature and a pressure in the stable region of wurtzite boron nitride (as indicated in Fig. 2 by arrows A2, A3 and A4, in Fig. 3 by arrows B2, B3 and B4, in Fig. 4 by arrows C2, C3 and halfway through C4, and in Fig. 5 by arrows D2, D3 and D4). The heating and pressurizing step is performed along a route entering the stable region of wurtzite boron nitride at a temperature greater than or equal to 600°C.

In the present specification, a temperature at which a route enters the stable region of wurtzite boron nitride means a temperature at which the route first reaches the stable region of wurtzite boron nitride. In Fig. 2, the entry temperature is a temperature at an intersection of the arrow A3 and the line of P = -0.0037T + 11.301 (i.e., about 1200°C), and in Fig. 3, it is a temperature at an intersection of the arrow B3 and the line of P = -0.0037T + 11.301 (i.e., about 600°C). In Fig. 4, the entry temperature is a temperature at an intersection of the arrow C3 and the line of P = - 0.0037T + 11.301 (i.e., about 1200°C), and in Fig. 5, it is a temperature at an intersection of the arrow D3 and the line of P = -0.0037T + 11.301 (i.e., about 1200°C).

When the pretreatment step is performed, then, the hexagonal boron nitride powder having undergone the pretreatment step is heated from the ultimate temperature reached at the end of the pretreatment step to a temperature greater than or equal to 1900°C and less than or equal to 2400°C and pressurized from the ultimate pressure reached at the end of the pretreatment step to a pressure greater than or equal to 8 GPa, with the temperature and the pressure passing through a temperature and a pressure in the stable region of wurtzite boron nitride. The heating and pressurizing step in this case is also performed along a route entering the stable region of wurtzite boron nitride at a temperature greater than or equal to 600°C.

The heating and pressurizing step is performed along a route entering the stable region of wurtzite boron nitride at a temperature greater than or equal to 600°C. According to this, hexagonal boron nitride powder is transformed into wurtzite boron nitride in an environment where atomic diffusion easily occurs, and thereafter transformed into polycrystalline cubic boron nitride. As a result, the obtained polycrystalline cubic boron nitride has reduced lattice defects and is thus enhanced in strength and toughness. Therefore, a tool using the polycrystalline cubic boron nitride can have a long tool life even in high-speed processing of iron-based materials.

The heating and pressurizing step is performed along a route entering the stable region of wurtzite boron nitride at a temperature preferably greater than or equal to 900°C, more preferably greater than or equal to 1200°C. For higher entry temperature, atomic diffusion more easily occurs, and lattice defects tend to decrease. The entry temperature can have an upper limit value for example less than or equal to 1500°C.

In the heating and pressurizing step, ultimate pressure is greater than or equal to 8 GPa. While the upper limit value of the ultimate pressure is not particularly limited, it can for example be less than or equal to 15 GPa. In the heating and pressurizing step, after the heating and pressurizing route has entered the stable region of wurtzite boron nitride, the pressure is preferably increased to 10 GPa or more.

The heating and pressurizing step can be held at a temperature and a pressure in the stable region of wurtzite boron nitride for example for greater than or equal to 5 minutes and less than or equal to 60 minutes.

In the heating and pressurizing step, when the routes shown in Figs. 2 to 5 are followed, heating is initially performed followed by pressurizing followed by further heating. However, this is not exclusive. The heating and pressurizing may be done in any method following a route entering the stable region of wurtzite boron nitride at 600°C or higher. For example, heating and pressurizing may be performed simultaneously.

Thus, a polycrystalline cubic boron nitride can be obtained by heating and pressurizing hexagonal boron nitride powder.

<Temperature and Pressure Holding Step>

After the above heating and pressurizing step, the step of holding the polycrystalline cubic boron nitride produced by the heating and pressurizing step under conditions of a temperature greater than or equal to 1900°C and less than or equal to 2400°C (hereinafter also referred to as "the sintering temperature") and a pressure greater than or equal to 8 GPa (hereinafter also referred to as "the sintering pressure") for greater than or equal to 10 minutes can be performed. A polycrystalline cubic boron nitride thus obtained contains cubic boron nitride at an increased ratio and can thus achieve a longer tool life.

The sintering temperature in the temperature and pressure holding step is preferably greater than or equal to 1900°C and less than or equal to 2400°C, more preferably greater than or equal to 2100°C and less than or equal to 2300°C. The sintering pressure in the temperature and pressure holding step is preferably greater than or equal to 8 GPa and less than or equal to 15 GPa, more preferably greater than or equal to 9 GPa and less than or equal to 12 GPa. The sintering time in the temperature and pressure holding step is preferably greater than or equal to 10 minutes and less than or equal to 60 minutes, more preferably greater than or equal to 10 minutes and less than or equal to 30 minutes.

<Characteristics of Polycrystalline Cubic Boron Nitride Obtained Through Routes in Figs. 2 to 5>

When the route in Fig. 2 is followed, the route enters the stable region of wurtzite boron nitride at a temperature of about 1200°C. According to this, hexagonal boron nitride powder is transformed into wurtzite boron nitride in an environment where atomic diffusion significantly easily occurs. For this reason, the wurtzite boron nitride has few lattice defects and a significantly low dislocation density. Thereafter, the wurtzite boron nitride is further heated and thus transformed into a polycrystalline cubic boron nitride, and then, the polycrystalline cubic boron nitride is held at a temperature of about 2200°C and a pressure of about 9 GPa. This temperature and pressure condition does not cause grain growth of the cubic boron nitride. Therefore, the obtained polycrystalline cubic boron nitride has a significantly low dislocation density and has no coarse grains.

When the route in Fig. 3 is followed, the route enters the stable region of wurtzite boron nitride at a temperature of about 600°C. According to this, the hexagonal boron nitride powder is transformed into wurtzite boron nitride in an environment where atomic diffusion occurs. For this reason, the wurtzite boron nitride has few lattice defects and hence a low dislocation density. However, since the route enters the stable region of wurtzite boron nitride at a temperature lower than that of the route in Fig. 2 and non-diffusive phase transition also occurs, coarse grains may be generated. Thereafter, the wurtzite boron nitride is further heated and thus transformed into a polycrystalline cubic boron nitride, and then, the polycrystalline cubic boron nitride is held at a temperature of about 2200°C and a pressure of about 9 GPa. Therefore, the obtained polycrystalline cubic boron nitride has a low dislocation density but may have coarse grains.

When the route in Fig. 4 is followed, the route enters the stable region of wurtzite boron nitride at a temperature of about 1200°C. According to this, hexagonal boron nitride powder is transformed into wurtzite boron nitride in an environment where atomic diffusion significantly easily occurs. For this reason, the wurtzite boron nitride has few lattice defects and a significantly low dislocation density. Thereafter, the wurtzite boron nitride is further heated and thus transformed into a polycrystalline cubic boron nitride, and then, the polycrystalline cubic boron nitride is held at a temperature of about 2500°C and a pressure of about 9 GPa. This temperature and pressure condition causes grain growth of the cubic boron nitride. Therefore, the obtained polycrystalline cubic boron nitride has a significantly low dislocation density but has coarse grains.

When the route in Fig. 5 is followed, the route enters the stable region of wurtzite boron nitride at a temperature of about 1200°C. According to this, hexagonal boron nitride powder is transformed into wurtzite boron nitride in an environment where atomic diffusion significantly easily occurs. For this reason, the wurtzite boron nitride has few lattice defects and a significantly low dislocation density. Thereafter, the wurtzite boron nitride is further heated and thus transformed into a polycrystalline cubic boron nitride, and then, the polycrystalline cubic boron nitride is held at a temperature of about 2200°C and a pressure of about 15 GPa. This temperature and pressure condition does not cause grain growth of the cubic boron nitride. Therefore, the obtained polycrystalline cubic boron nitride has a significantly low dislocation density and has suppressed coarse grains.

When the polycrystalline cubic boron nitride obtained through the route in Fig. 2 is compared with the polycrystalline cubic boron nitride obtained through the route in Fig. 3, the former has a lower dislocation density and less coarse grains than the latter. This is because it is believed that the route in Fig. 2 enters the stable region of wurtzite boron nitride at a higher temperature and thus facilitates atomic diffusion.

When the polycrystalline cubic boron nitride obtained through the route in Fig. 2 is compared with the polycrystalline cubic boron nitride obtained through the route in Fig. 4, the former has less coarse grains than the latter. This is because it is believed that the temperature and pressure holding condition in the stable region of the cubic boron nitride is a condition that does not cause grain growth of the cubic boron nitride in the route in Fig. 2, whereas the temperature and pressure holding condition in the stable region of the cubic boron nitride is a condition that causes grain growth of the cubic boron nitride in the route in Fig. 4.

When the polycrystalline cubic boron nitride obtained through the route in Fig. 2 is compared with the polycrystalline cubic boron nitride obtained through the route in Fig. 5, the former is equivalent in dislocation density to the latter, but the former has a larger volume of the obtained sintered body than the latter. This is because the route in Fig. 2 is lower in the holding pressure in the stable region of the cubic boron nitride. Therefore, the route in Fig. 2 is more preferable from the viewpoint of productivity.

EXAMPLES

The present embodiment will be described more specifically with reference to examples. However, the present embodiment is not limited to these examples.

In these examples, a relationship was investigated between the conditions for manufacturing a polycrystalline cubic boron nitride, and the constitution (composition, dislocation density, area rate S1 of the crystal grains having an equivalent circle diameter greater than or equal to 1 $\mu$m, area rate S2 of the plate-like grains, and median diameter), and the performance of the resulting polycrystalline cubic boron nitride.

<Production of Polycrystalline Cubic Boron Nitride>

A polycrystalline cubic boron nitride was produced according to the following procedure.

[Samples 1 to 6]

(Pretreatment Step)

6 g of a hexagonal boron nitride powder ("DENKA BORON NITRIDE" (trade name) manufactured by Denka Company Limited, grain size: 5 $\mu$m) was prepared. The hexagonal boron nitride powder was put in a capsule made of molybdenum, and pressurized to the pressure indicated in the column of "1st stage pressurizing pressure" of "Pretreatment step" in Table 1 at 25°C (room temperature) using an ultra-high pressure and ultra-high temperature generator.

(Heating and Pressurizing Step)

Subsequently, the ultra-high pressure and ultra-high temperature generator's internal temperature was raised to a temperature indicated in the column of "wBN stable region entry temperature" of "Heating and pressurizing step" in Table 1. While doing so, the ultra-high pressure and ultra-high temperature generator had an internal pressure held at a pressure indicated in the column of " 1st stage pressurizing pressure" of "Pretreatment step" in Table 1.

Subsequently, the ultra-high pressure and ultra-high temperature generator had the internal pressure increased to a pressure indicated in the column of "2nd stage pressurizing pressure" of "Heating and pressuring step" in Table 1. During this time, the ultra-high pressure and ultra-high temperature generator's internal temperature and pressure were changed from those in the stable region of hexagonal boron nitride to those in the stable region of wurtzite boron nitride. The heating and pressurizing step was performed along a route entering the stable region of wurtzite boron nitride at a temperature indicated in the column of "wBN stable region entry temperature" of "Heating and pressurizing step" in Table 1.

Subsequently, the ultra-high pressure and ultra-high temperature generator's internal temperature was raised to a temperature indicated in the column of "Temperature" of "Temperature and pressure holding step" in Table 1. While doing so, the ultra-high pressure and ultra-high temperature generator's internal pressure was held at a pressure indicated in the column of "2nd stage pressurizing pressure" of "Heating and pressurizing step" in Table 1.

(Temperature and Pressure Holding Step)

Polycrystalline cubic boron nitride was obtained by holding the intermediate product for 10 minutes at a temperature and a pressure indicated in the column of "Temperature" and "Pressure" of "Temperature and pressure holding step" in Table 1.

[Samples 7 to 9]

(Pretreatment Step)

6 g of a hexagonal boron nitride powder ("DENKA BORON NITRIDE" (trade name) manufactured by Denka Company Limited, grain size: 5 $\mu$m) was prepared. The hexagonal boron nitride powder was put in a capsule made of molybdenum, and pressurized to the pressure indicated in the column of "1st stage pressurizing pressure" of "Pretreatment step" in Table 1 at 25°C (room temperature) using an ultra-high pressure and ultra-high temperature generator.

(Heating and Pressurizing Step)

Subsequently, the ultra-high pressure and ultra-high temperature generator's internal temperature was raised to a temperature indicated in the column of "wBN stable region entry temperature" of "Heating and pressurizing step" in Table 1. While doing so, the ultra-high pressure and ultra-high temperature generator had an internal pressure held at a pressure indicated in the column of " 1st stage pressurizing pressure" of "Pretreatment step" in Table 1. During this time, the ultra-high pressure and ultra-high temperature generator's internal temperature and pressure were changed from those in the stable region of hexagonal boron nitride to those in the stable region of wurtzite boron nitride. The heating and pressurizing step was performed along a route entering the stable region of wurtzite boron nitride at a temperature indicated in the column of "wBN stable region entry temperature" of "Heating and pressurizing step" in Table 1.

Thereafter, the ultra-high pressure and ultra-high temperature generator's internal temperature was further raised to a temperature indicated in the column of "Temperature" of "Temperature and pressure holding step" in Table 1. While doing so, the ultra-high pressure and ultra-high temperature generator's internal pressure was held at a pressure indicated in the column of "1st stage pressurizing pressure" of "Pretreatment step" in Table 1.

(Temperature and Pressure Holding Step)

Polycrystalline cubic boron nitride was obtained by holding the intermediate product for 10 minutes at a temperature and a pressure indicated in the column of "Temperature" and "Pressure" of "Temperature and pressure holding step" in Table 1.

[Sample 10]

(Pretreatment Step and Heating and Pressurizing Step)

6 g of a hexagonal boron nitride powder ("DENKA BORON NITRIDE" (trade name) manufactured by Denka Company Limited, grain size: 5 $\mu$m) was prepared. The hexagonal boron nitride powder was put in a capsule made of molybdenum, and pressurized to the pressure (12 GPa) indicated in the column of "1st stage pressurizing pressure" of "Pretreatment step" in Table 1 at 25°C (room temperature) using an ultra-high pressure and ultra-high temperature generator.

During this time, the ultra-high pressure and ultra-high temperature generator's internal temperature and pressure were changed from those in the stable region of hexagonal boron nitride to those in the stable region of wurtzite boron nitride. As for Sample 10, the heating and pressurizing step was performed along a route entering the stable region of wurtzite boron nitride at a temperature (25°C) indicated in the column of "wBN stable region entry temperature" of "Heating and pressurizing step" in Table 1.

Thereafter, the ultra-high pressure and ultra-high temperature generator's internal temperature was further raised to a temperature indicated in the column of "Temperature" of "Temperature and pressure holding step" in Table 1. While doing so, the ultra-high pressure and ultra-high temperature generator's internal pressure was held at a pressure indicated in the column of "1st stage pressurizing pressure" of "Pretreatment step" in Table 1.

(Temperature and Pressure Holding Step)

Polycrystalline cubic boron nitride was obtained by holding the intermediate product for 10 minutes at a temperature and a pressure indicated in the column of "Temperature" and "Pressure" of "Temperature and pressure holding step" in Table 1.

[Sample 11]

(Pretreatment Step)

6 g of a hexagonal boron nitride powder ("DENKA BORON NITRIDE" (trade name) manufactured by Denka Company Limited, grain size: 5 $\mu$m) was prepared. The hexagonal boron nitride powder was put in a capsule made of molybdenum, and pressurized to the pressure indicated in the column of "1st stage pressurizing pressure" of "Pretreatment step" in Table 1 at 25°C (room temperature) using an ultra-high pressure and ultra-high temperature generator.

(Heating and Pressurizing Step)

Subsequently, the ultra-high pressure and ultra-high temperature generator's internal temperature was raised to 1500°C. While doing so, the ultra-high pressure and ultra-high temperature generator had an internal pressure held at a pressure indicated in the column of "1st stage pressurizing pressure" of "Pretreatment step" in Table 1.

Subsequently, the ultra-high pressure and ultra-high temperature generator had the internal pressure increased to a pressure indicated in the column of "2nd stage pressurizing pressure" of "Heating and pressuring step" in Table 1. During this time, the ultra-high pressure and ultra-high temperature generator's internal temperature and pressure were changed from those in the stable region of hexagonal boron nitride to those in the stable region of cubic boron nitride.

Subsequently, the ultra-high pressure and ultra-high temperature generator's internal temperature was raised to a temperature indicated in the column of "Temperature" of "Temperature and pressure holding step" in Table 1. While doing so, the ultra-high pressure and ultra-high temperature generator's internal pressure was held at a pressure indicated in the column of "2nd stage pressurizing pressure" of "Heating and pressurizing step" in Table 1.

(Temperature and Pressure Holding Step)

Polycrystalline cubic boron nitride was obtained by holding the intermediate product for 10 minutes at a temperature and a pressure indicated in the column of "Temperature" and "Pressure" of "Temperature and pressure holding step" in Table 1.

[Comparative Reference Example]

"BN7000" (trade name) manufactured by Sumitomo Electric Hardmetal Corp. was prepared as a comparative reference example. This is a normal cubic boron nitride sintered body containing a binder.

<Evaluation>

(Measurement of Composition)

The content rate of the cubic boron nitride in the polycrystalline cubic boron nitride of each of Samples 1 to 11 was measured in accordance with an X-ray diffraction method. Since a specific manner of the X-ray diffraction method is as described in the first embodiment, description thereof will not be repeated.

For Samples 1 to 11, no component other than cBN, wBN, and compressed hBN was identified. In Samples 1 to 10, the content rate of the cubic boron nitride in the polycrystalline cubic boron nitride was greater than or equal to 98.5% by volume. In Sample 11, the content rate of the cubic boron nitride in the polycrystalline cubic boron nitride was less than 98.5% by volume.

(Measurement of Dislocation Density)

The line profile obtained by the X-ray diffraction measurement was analyzed using the modified Williamson-Hall method and the modified Warren-Averbach method to calculate the dislocation density of the polycrystalline cubic boron nitride of each of Samples 1 to 11. Since the specific method for calculating the dislocation density is as described in the first embodiment, description thereof will not be repeated. The X-ray diffraction measurement was performed in BL for Sumitomo Electric Industries' exclusive use located in the Kyushu Synchrotron Light Research Center established by Saga Prefecture. The results are shown in the column of "Dislocation density" in Table 1.

(Measurement of Crystal Grains)

For the crystal grains contained in the polycrystalline cubic boron nitride of each of Samples 1 to 11, the median diameter d50 of the equivalent circle diameter, the area rate of the crystal grains having an equivalent circle diameter greater than or equal to 1 $\mu$m, and the area rate S2 of the plate-like grains were measured. Since the specific method is as described in the first embodiment, description thereof will not be repeated. The results are shown in the columns of "Median diameter d50", "Area rate S1 of crystal grains having equivalent circle diameter greater than or equal to 1 $\mu$m", and "Area rate S2 of plate-like grains" in Table 1.

(Cutting Test)

The polycrystalline cubic boron nitride of each of Samples 1 to 11 was cut with a laser and finished to produce a cutting tool having an insert model number SNEW1203ADTR (manufactured by Sumitomo Electric Hardmetal Corp.). Using the obtained cutting tool, face milling of gray cast iron FC300 block material (80 mm $\times$ 300 mm $\times$ 150 mm) was performed, and a tool life was evaluated.

(Cutting Conditions)

    Used cutter: FMU4100R (manufactured by Sumitomo Electric Hardmetal Corp.)
    Insert model number: SNEW1203ADTR (manufactured by Sumitomo Electric Hardmetal Corp.)
    Cutting speed: 2500 m/min
    Cutting amount: 0.3 mm
    Feed amount: 0.2 mm/t

Dry processing

The cutting was performed under the above-described cutting conditions, and the processing time until chipping of greater than or equal to 0.2 mm occurred was measured. It is shown that the longer the processing time is, the better the chipping resistance is, and the longer the tool life is. In a tool using a conventional cubic boron nitride sintered body, the standard cutting speed is 1500 m/min, and when the cutting speed exceeds 2000 m/min, chipping is likely to occur.

Therefore, the cutting condition that the cutting speed is 2500 m/min is a high-speed processing condition.

[Table 1]

| Sample No. | Pretreatment step | | Heating and Pressurizing step | | Temperature and pressure holding step | | | Polycrystalline cubic boron nitride | | | | Evaluation |
|---|---|---|---|---|---|---|---|---|---|---|---|---|
| | 1st stage pressurizing pressure | Temperature | wBN stable region entry temperature | 2nd stage pressurizing pressure | Temperature | Pressure | Holding time | Dislocation density (x $10^{15}$/m$^2$) | Area rate S1 of crystal grains having equivalent circle diameter greater than or equal to 1 μm (area%) | Area rate S2 of plate-like grains (area%) | Median diameter d50 (μm) | Tool life |
| 1 | 5GPa | 25°C | 1200°C | 10GPa | 2200°C | 10GPa | 30 min | 5.22 | 3.5 | 1.2 | 0.24 | 318 min |
| 2 | 5GPa | 25°C | 900°C | 10GPa | 2200°C | 10GPa | 30 min | 6.64 | 4.1 | 1.8 | 0.22 | 289 min |
| 3 | 5GPa | 25°C | 600°C | 10GPa | 2200°C | 10GPa | 30 min | 7.85 | 5.9 | 2.9 | 0.27 | 273 min |
| 4 | 5GPa | 25°C | 1200°C | 10GPa | 2400°C | 10GPa | 20 min | 4.91 | 9.6 | 1.9 | 0.28 | 271 min |
| 5 | 5GPa | 25°C | 1200°C | 10GPa | 2500°C | 10GPa | 20 min | 4.76 | 39.2 | 2.3 | 0.47 | 244 min |
| 6 | 5GPa | 25°C | 1200°C | 15GPa | 2200°C | 15GPa | 20 min | 5.31 | 3.2 | 1.7 | 0.16 | 312 min |
| 7 | 8GPa | 25°C | 892°C | - | 2200°C | 8GPa | 10 min | 6.97 | 8.6 | 3.6 | 0.38 | 241 min |
| 8 | 9GPa | 25°C | 622°C | - | 2200°C | 9GPa | 10 min | 7.72 | 7.4 | 4.3 | 0.29 | 266 min |
| 9 | 10GPa | 25°C | 352°C | - | 2200°C | 10GPa | 10 min | 9.04 | 26.8 | 7.4 | 0.26 | 118 min |
| 10 | 12GPa | 25°C | 25°C(room temperature) | - | 2200°C | 12GPa | 10 min | 10.93 | 36.1 | 10.8 | 0.44 | 103 min |
| 11 | 2GPa | 25°C | not via | 10GPa | 2200°C | 10GPa | 30 min | 9.86 | 4.5 | 0.8 | 0.33 | 136 min |
| Comparative reference example | BN7000 | | | | | | | | | | | 47 min |

EP 3 858 803 B1

<Discussion>

The methods for manufacturing Samples 1 to 8 include a step of heating and pressurizing the hexagonal boron nitride powder to a temperature greater than or equal to 1900°C and less than or equal to 2400°C and to a pressure greater than or equal to 8 GPa, with the temperature and the pressure passing through a temperature and a pressure in the stable region of the wurtzite boron nitride, wherein the entry temperature into the stable region of the wurtzite boron nitride is greater than or equal to 600°C, and correspond to examples. The polycrystalline cubic boron nitrides of Samples 1 to 8 contain a cubic boron nitride at a content greater than or equal to 98.5% by volume, have a dislocation density less than or equal to $8 \times 10^{15}/m^2$, and correspond to examples. It was confirmed that the polycrystalline cubic boron nitrides of Samples 1 to 8 were capable of achieving a long tool life even in high-speed processing of iron-based materials.

Particularly, in the methods for manufacturing Samples 1 to 6, the entry temperature into the stable region of the wurtzite boron nitride was greater than or equal to 600°C, and thereafter, the pressure was raised to a pressure greater than or equal to 10 GPa in the heating and pressurizing step. The polycrystalline cubic boron nitrides of Samples 1 to 6 had a longer tool life than the polycrystalline cubic boron nitrides of Samples 7 and 8 produced without raising the pressure to a pressure greater than or equal to 10 GPa in the heating and pressurizing step. It was confirmed from this result that it was more preferable that the entry temperature into the stable region of the wurtzite boron nitride was greater than or equal to 600°C in the method for manufacturing a polycrystalline cubic boron nitride according to an embodiment of the present disclosure, and the method included the step of subsequently raising the pressure to a pressure greater than or equal to 10 GPa.

In the methods for manufacturing Samples 9 and 10, the entry temperature into the stable region of the wurtzite boron nitride is less than 600°C, and the methods for manufacturing Samples 9 and 10 correspond to comparative examples. The polycrystalline cubic boron nitrides of Samples 9 and 10 contain a cubic boron nitride at a content greater than or equal to 98.5% by volume but have a dislocation density exceeding $8 \times 10^{15}/m^2$, and correspond to comparative examples. It was confirmed that the polycrystalline cubic boron nitrides of Samples 9 and 10 had a shorter tool life in high-speed processing of iron-based materials than those of Samples 1 to 8.

The method for manufacturing Sample 11 does not pass through the temperature and the pressure in the stable region of the wurtzite boron nitride, and corresponds to a comparative example. The polycrystalline cubic boron nitride of Sample 11 contains a cubic boron nitride at a content rate less than 98.5% by volume and has a dislocation density exceeding $8 \times 10^{15}/m^2$, and corresponds to a comparative example. It was confirmed that the polycrystalline cubic boron nitride of Sample 11 had a shorter tool life in high-speed processing of iron-based materials than those of Samples 1 to 8.

As described above, the embodiments and examples of the present disclosure have been described. It is also planned from the beginning that the configurations of the above-described embodiments and examples are appropriately combined and variously modified.

The embodiments and examples disclosed herein are illustrative in all respects and should not be construed as being restrictive. The scope of the present disclosure is shown not by the above-described embodiments and examples but by the claims, and is intended to include all modifications within the scope of the claims.

**Claims**

**1.** A polycrystalline cubic boron nitride comprising a cubic boron nitride at a content greater than or equal to 98.5% by volume,

the polycrystalline cubic boron nitride having a dislocation density less than or equal to $8 \times 10^{15}/m^2$, the distribution density being measured using the method described in the description,
the polycrystalline cubic boron nitride includes a plurality of crystal grains, and
the plurality of crystal grains having a median diameter d50 of the equivalent circle diameter greater than or equal to 0.1 μm and less than or equal to 0.5 μm, the median diameter d50 of the equivalent circle diameter being measured using the method described in the description.

**2.** The polycrystalline cubic boron nitride according to claim 1, wherein
the dislocation density is less than or equal to $7 \times 10^{15}/m^2$.

**3.** The polycrystalline cubic boron nitride according to claim 1 or 2, wherein
the polycrystalline cubic boron nitride has an area rate S1 of crystal grains, the crystal grains having an equivalent circle diameter greater than or equal to 1 μm, less than or equal to 20 area% at a cross section of the polycrystalline cubic boron nitride as observed with a scanning electron microscope at a magnification of 10,000.

**4.** The polycrystalline cubic boron nitride according to claim 3, wherein
the area rate S1 is less than or equal to 15 area%.

**5.** The polycrystalline cubic boron nitride according to any one of claims 1 to 4, having an area rate S2 of plate-like grains, the plate-like grains having an aspect ratio greater than or equal to 4, less than or equal to 5 area% at a cross section of the polycrystalline cubic boron nitride as observed with a scanning electron microscope at a magnification of 10,000.

**6.** The polycrystalline cubic boron nitride according to any one of claims 1 to 5, wherein a total content rate of a compressed hexagonal boron nitride and a wurtzite boron nitride in the polycrystalline cubic boron nitride is greater than or equal to 0% by volume and less than or equal to 1.5% by volume.

**Patentansprüche**

**1.** Ein polykristallines kubisches Bornitrid, umfassend ein kubisches Bornitrid mit einem Gehalt von größer oder gleich 98,5 Vol.-%,

wobei das polykristalline kubische Bornitrid eine Versetzungsdichte von weniger oder gleich $8\times10^{15}/m^2$ aufweist, wobei die Verteilungsdichte unter Verwendung des in der Beschreibung beschriebenen Verfahrens gemessen wird,
wobei das polykristalline kubische Bornitrid eine Vielzahl von Kristallkörnern umfasst und
die Vielzahl von Kristallkörnern einen mittleren Durchmesser d50 des äquivalenten Kreisdurchmessers von größer oder gleich 0,1 $\mu$m und kleiner oder gleich 0,5 $\mu$m aufweisen, wobei der mittlerer Durchmesser d50 des äquivalenten Kreisdurchmessers unter Verwendung des in der Beschreibung beschriebenen Verfahrens gemessen wird.

**2.** Das polykristalline kubische Bornitrid nach Anspruch 1, wobei die Versetzungsdichte kleiner oder gleich $7\times10^{15}/m^2$ ist.

**3.** Das polykristalline kubische Bornitrid nach Anspruch 1 oder 2, wobei
das polykristalline kubische Bornitrid eine Flächenanteil S1 der Kristallkörner, wobei die Kristallkörner einen äquivalenten Kreisdurchmesser von größer oder gleich 1 $\mu$m, und weniger oder gleich 20 Flächenprozent an einem Querschnitt des polykristallinen kubischen Bornitrids aufweisen, betrachtet mit einem Rasterelektronenmikroskop bei einer Vergrößerung von 10.000.

**4.** Das polykristalline kubische Bornitrid nach Anspruch 3, wobei der Flächenanteil S1 kleiner oder gleich 15 Flächenprozent ist.

**5.** Das polykristalline kubisches Bornitrid nach einem der Ansprüche 1 bis 4, mit einem Flächenanteil S2 an plattenförmiger Körnern, wobei die plattenförmigen Körner ein Seitenverhältnis von größer oder gleich 4, und kleiner oder gleich 5 Flächenprozent an einem Querschnitt des polykristallinen kubischen Bornitrids aufweisen, betrachtet mit einem Rasterelektronenmikroskop bei einer Vergrößerung von 10.000.

**6.** Das polykristalline kubische Bornitrid nach einem der Ansprüche 1 bis 5, wobei ein Gesamtgehalt eines komprimiertem hexagonalem Bornitrid und eines Wurtzit-Bornitrid in dem polykristallinen kubischen Bornitrid größer oder gleich 0 Vol.-% und kleiner oder gleich 1,5 Vol.-% beträgt.

**Revendications**

**1.** Nitrure de bore cubique polycristallin comprenant un nitrure de bore cubique en une teneur supérieure ou égale à 98,5 % en volume,

le nitrure de bore cubique polycristallin ayant une densité de dislocations inférieure ou égale à 8 x $10^{15}/m^2$, la densité de distribution étant mesurée au moyen du procédé décrit dans la description,
le nitrure de bore cubique polycristallin incluant une pluralité de grains cristallins, et
la pluralité de grains cristallins ayant un diamètre médian d50 du diamètre de cercle équivalent supérieur ou égal à 0,1 $\mu$m et inférieur ou égal à 0,5 $\mu$m, le diamètre médian d50 du diamètre de cercle équivalent étant mesuré au moyen du procédé décrit dans la description.

2. Nitrure de bore cubique polycristallin selon la revendication 1, dans lequel la densité de dislocations est inférieure ou égale à 7 x $10^{15}$/m$^2$.

3. Nitrure de bore cubique polycristallin selon la revendication 1 ou 2, lequel nitrure de bore cubique polycristallin a une proportion de surface S1 des grains cristallins, les grains cristallins ayant un diamètre de cercle équivalent supérieur ou égal à 1 $\mu$m, inférieure ou égale à 20 % en surface au niveau d'une section transversale du nitrure de bore cubique polycristallin tel qu'observé au microscope électronique à balayage avec un grossissement de 10 000.

4. Nitrure de bore cubique polycristallin selon la revendication 3, dans lequel la proportion de surface S1 est inférieure ou égale à 15 % en surface.

5. Nitrure de bore cubique polycristallin selon l'une quelconque des revendications 1 à 4, ayant une proportion de surface S2 des grains lamellaires, les grains lamellaires ayant un rapport d'aspect supérieur ou égal à 4, inférieure ou égale à 5 % en surface au niveau d'une section transversale du nitrure de bore cubique polycristallin tel qu'observé au microscope électronique à balayage avec un grossissement de 10 000.

6. Nitrure de bore cubique polycristallin selon l'une quelconque des revendications 1 à 5, dans lequel la proportion en contenu totale de nitrure de bore hexagonal comprimé et de nitrure de bore de type wurtzite dans le nitrure de bore cubique polycristallin est supérieure ou égale à 0 % en volume et inférieure ou égale à 1,5 % en volume.

FIG.1

FIG.2

FIG.3

FIG.4

EP 3 858 803 B1

**FIG.5**

**FIG.6**

## FIG.7

## FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018182464 A
- JP 11246271 A
- EP 3255023 A1
- EP 2752398 A1

**Non-patent literature cited in the description**

- **T. UNGAR** ; **A. BORBELY**. The effect of dislocation contrast on x-ray line broadening: A new approach to line profile analysis. *Appl. Phys. Lett.*, 1996, vol. 69 (21), 3173
- **T. UNGAR** ; **S. OTT** ; **P. SANDERS** ; **A. BORBELY** ; **J. WEERTMAN**. Dislocations, grain size and planar faults in nanostructured copper determined by high resolution X-ray diffraction and a new procedure of peak profile analysis. *Acta Mater.*, 1998, vol. 46 (10), 3693-3699